# EUROPÄISCHE PATENTSCHRIFT

(11) **EP 3 856 612 B1**
(45) Veröffentlichungstag und Bekanntmachung des Hinweises auf die Patenterteilung: **17.07.2024**
(21) Anmeldenummer: 19769122.3
(22) Anmeldetag: 11.09.2019
(51) Int. Cl.: B62D 5/04

(54) **LENKVORRICHTUNG MIT EINER STECKVERBINDEREINHEIT ZUR ELEKTRISCHEN KONTAKTIERUNG EINER LENKSENSOREINHEIT**
STEERING DEVICE HAVING A PLUG CONNECTOR UNIT FOR ELECTRICALLY CONTACTING A STEERING SENSOR UNIT
DISPOSITIF DE DIRECTION COMPRENANT UNE UNITÉ CONNECTEUR ÉLECTRIQUE POUR METTRE EN CONTACT ÉLECTRIQUE UNE UNITÉ DE DÉTECTION DE DIRECTION

(30) Priorität: 26.09.2018 DE 102018216477
(43) Veröffentlichungstag der Anmeldung: 04.08.2021
(73) Patentinhaber: Robert Bosch GmbH, 70442 Stuttgart (DE)
(72) Erfinder: MATTUS, Waldemar, 73525 Schwäbisch Gmünd (DE); WEBER, Marten, 73460 Hüttlingen (DE); ISDEBSKI, Tobias, 70178 Stuttgart (DE); SEIBOLD, Philipp, 70734 Fellbach (DE)
(86) Internationale Anmeldenummer: PCT/EP2019/074287
(87) Internationale Veröffentlichungsnummer: WO 2020/064335

(56) Entgegenhaltungen:
- EP-A1- 1 986 281
- DE-A1- 102013 112 242

## Beschreibung

### Stand der Technik

Die Erfindung betrifft eine Lenkvorrichtung und ein Verfahren zur Montage einer Lenkvorrichtung. Zudem betrifft die Erfindung ein Lenksystem mit einer solchen Lenkvorrichtung und eine Steckverbindereinheit einer solchen Lenkvorrichtung.

Aus dem Stand der Technik sind Lenksysteme für Kraftfahrzeuge mit an einer Lenkwelle angeordneten Lenksensoren zur Bestimmung eines Lenkwinkels und/oder eines an der Lenkwelle ausgeübten Lenkmoments bekannt. Derartige Lenksensoren umfassen in der Regel ein mit der Lenkwelle verbundenes Sensorgehäuse sowie ein in dem Sensorgehäuse angeordnetes Sensorelement.

Bei einem bekannten Montageprozess wird das Sensorgehäuse auf die Lenkwelle geschoben und an der Lenkwelle befestigt. Anschließend wird die Lenkwelle zusammen mit dem Sensorgehäuse in eine Montageöffnung eines Lenkgetriebegehäuses eingesetzt, wobei gleichzeitig ein Sensorkabel manuell von einem Monteur mit dem Sensorgehäuse bzw. dem Sensorelement verbunden werden kann. Anschließend wird die Montageöffnung mittels eines Gehäusedeckels verschlossen. Dieser Aufbau führt jedoch zu einem komplizierten und zeitaufwändigen Montageprozess, welcher insbesondere mehrere Montageschritte sowie ein manuelles Stecken des Sensorkabels während des Montageprozesses der Lenkwelle bzw. des Lenksensors erfordert.

Ferner ist aus der DE 10 2013 112 242 A1 eine Lenkvorrichtung bekannt, mit einem Lenkgetriebegehäuse, welches einen Sensoraufnahmebereich bereitstellt, mit einer in einem montierten Zustand in dem Sensoraufnahmebereich angeordneten Lenksensoreinheit, und mit einer in einer Kontaktierungsausnehmung des Lenkgetriebegehäuses angeordneten Steckverbindereinheit zur elektrischen Kontaktierung der Lenksensoreinheit, wobei die Steckverbindereinheit eine Steckeinheit zur Verbindung mit der Lenksensoreinheit und eine zumindest in einem vormontierten Zustand der Steckverbindereinheit mit der Steckeinheit gekoppelte Trägereinheit umfasst.

Darüber hinaus offenbart die EP 1 986 281 A1 in Bezug auf den unabhängigen Anspruch 1
eine Lenkvorrichtung mit einem Gehäuse, welches einen Sensoraufnahmebereich bereitstellt, mit einer in einem montierten Zustand in dem Sensoraufnahmebereich angeordneten Lenksensoreinheit, und mit einer in einem montierten Zustand in einer Kontaktierungsausnehmung des Lenkgetriebegehäuses angeordneten Steckverbindereinheit zur elektrischen Kontaktierung der Lenksensoreinheit, wobei die Steckverbindereinheit eine Steckeinheit zur Verbindung mit der Lenksensoreinheit und eine zumindest in einem vormontierten Zustand der Steckverbindereinheit mit der Steckeinheit gekoppelte Trägereinheit umfasst, wobei die Lenkvorrichtung ferner eine Entkoppeleinheit umfasst, welche dazu vorgesehen ist, eine bei einem Montagevorgang der Steckverbindereinheit ausgeübte Kraft derart auf die Steckeinheit und/oder die Trägereinheit zu übertragen, dass sich die Verbindung zwischen der Steckeinheit und der Trägereinheit beim Montagevorgang der Steckverbindereinheit löst, und wobei die Steckeinheit zur Verbindung mit der Trägereinheit und/oder die Trägereinheit zur Verbindung mit der Steckeinheit wenigstens ein elastisches Ausgleichselement umfasst, welches dazu vorgesehen ist, wenigstens ein Steckelement der Steckeinheit zumindest während des Montagevorgangs der Steckverbindereinheit federnd zu lagern,
sowie in Bezug auf den unabhängigen Anspruch 16 ein
Verfahren zur Montage einer Lenkvorrichtung, wobei die Lenkvorrichtung ein Gehäuse, welches einen Sensoraufnahmebereich bereitstellt, eine in einem montierten Zustand in dem Sensoraufnahmebereich angeordnete Lenksensoreinheit und eine in einem montierten Zustand in einer Kontaktierungsausnehmung des Lenkgetriebegehäuses angeordnete Steckverbindereinheit zur elektrischen Kontaktierung der Lenksensoreinheit umfasst, wobei die Steckverbindereinheit eine Steckeinheit zur Verbindung mit der Lenksensoreinheit und eine zumindest in einem vormontierten Zustand der Steckverbindereinheit mit der Steckeinheit gekoppelte Trägereinheit umfasst, und wobei eine bei einem Montagevorgang der Steckverbindereinheit ausgeübte Kraft derart auf die Steckeinheit und/oder die Trägereinheit übertragen wird, dass die Verbindung zwischen der Steckeinheit und der Trägereinheit beim Montagevorgang der Steckverbindereinheit gelöst wird.

Die Aufgabe der Erfindung besteht insbesondere darin, eine Lenkvorrichtung und ein Verfahren zur Montage einer Lenkvorrichtung mit verbesserten Eigenschaften hinsichtlich einer Kontaktierung bereitzustellen. Die Aufgabe wird durch die Merkmale der Ansprüche 1, 14, 15 und 16 gelöst, während vorteilhafte Ausgestaltungen und Weiterbildungen der Erfindung den Unteransprüchen entnommen werden können.

### Offenbarung der Erfindung

Die Erfindung geht aus von einer Lenkvorrichtung mit einem Lenkgetriebegehäuse, welches einen Sensoraufnahmebereich bereitstellt, mit einer in einem montierten Zustand in dem Sensoraufnahmebereich angeordneten Lenksensoreinheit, insbesondere zur Erfassung wenigstens einer Lenkinformation, insbesondere von einer um eine Lenkachse drehbar gelagerten Lenkwelle, und mit einer in einem montierten Zustand in einer, vorteilhaft in Umfangsrichtung geschlossenen, Kontaktierungsausnehmung, insbesondere einer Bohrung und/oder einer Durchbrechung, des Lenkgetriebegehäuses angeordneten Steckverbindereinheit zur, insbesondere direkten, elektrischen Kontaktierung der Lenksensoreinheit, insbesondere bei einem Montagevorgang der Steckverbindereinheit, wobei die Steckverbindereinheit eine Steckeinheit zur Verbindung mit der Lenksensoreinheit und eine zumindest in einem vormontierten Zustand der Steckverbindereinheit mit der Steckeinheit gekoppelte Trägereinheit umfasst.

Es wird vorgeschlagen, dass die Lenkvorrichtung eine Entkoppeleinheit aufweist, welche dazu vorgesehen ist, eine bei einem Montagevorgang der Steckverbindereinheit ausgeübte Kraft derart auf die Steckeinheit und/oder die Trägereinheit zu übertragen, dass sich die Verbindung zwischen der Steckeinheit und der Trägereinheit beim Montagevorgang der Steckverbindereinheit löst. Durch diese Ausgestaltung kann insbesondere eine vorteilhaft sichere und/oder flexible Kontaktierung der Lenksensoreinheit mit einer definierten Steckkraft erreicht werden.

Darüber hinaus kann dabei insbesondere ein Montagevorgang stark vereinfacht werden, wobei eine vorteilhafte Automatisierung des Montagevorgangs erreicht und eine Anzahl manueller Arbeitsschritte reduziert werden kann. Ferner kann vorteilhaft eine Flexibilität der Lenkvorrichtung erhöht und/oder eine Betriebssicherheit verbessert werden. Zudem kann vorteilhaft eine Standzeit und/oder eine Dauerfestigkeit der Lenkvorrichtung verbessert werden.

Unter einer "Lenkvorrichtung" soll in diesem Zusammenhang insbesondere zumindest ein Teil, insbesondere eine Unterbaugruppe, eines Lenksystems, insbesondere eines Fahrzeugs und vorzugsweise eines Kraftfahrzeugs, verstanden werden. Die Lenkvorrichtung kann ferner insbesondere einen Gehäusedeckel umfassen, welcher dazu vorgesehen ist, in einem montierten Zustand den Sensoraufnahmebereich in axialer Richtung abzudecken und insbesondere zu verschließen. Vorteilhaft weist das Lenkgetriebegehäuse dabei eine, insbesondere mittels des Gehäusedeckels verschließbare, Montageöffnung zur Aufnahme der Lenksensoreinheit und vorteilhaft zur zumindest teilweisen Aufnahme der Lenkwelle auf. Die Lenkwelle ist bevorzugt mehrteilig ausgebildet und umfasst zumindest eine Eingangswelle, vorzugsweise eine Lenkspindel, und zumindest eine von der Eingangswelle getrennt ausgebildete Ausgangswelle, vorzugsweise ein Lenkritzel. Eine Längserstreckung der Lenkwelle definiert dabei insbesondere die axiale Richtung. Insbesondere kann die Lenkvorrichtung auch die Lenkwelle umfassen. Ferner soll unter einer "Lenksensoreinheit" insbesondere eine, insbesondere die Lenkwelle in Umfangsrichtung umgreifende, Sensoreinheit verstanden werden, welche dazu vorgesehen ist, anhand einer Verdrehung der Lenkwelle und vorteilhaft einer Verdrehung der Eingangswelle relativ zu der Ausgangswelle, wenigstens eine, insbesondere mit einer Betätigung einer Lenkhandhabe des Lenksystems korrelierte, Lenkinformation zu erfassen. Die Lenkinformation ist dabei vorzugsweise ein Lenkwinkel und/oder ein, insbesondere mittels der Lenkhandhabe auf die Lenkwelle aufgebrachtes, Lenkmoment. Zur Erfassung der Lenkinformation kann die Lenksensoreinheit insbesondere wenigstens ein Sensorelement umfassen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Des Weiteren soll unter einer "Steckverbindereinheit" insbesondere eine, insbesondere im montierten Zustand mit dem Lenkgetriebegehäuse in Wirkverbindung stehende und vorteilhaft separat und/oder getrennt von dem Lenkgetriebegehäuse ausgebildete, Einheit verstanden werden, welche dazu vorgesehen ist, eine Kontaktierungsmöglichkeit zur elektrischen Kontaktierung der Lenksensoreinheit bereitzustellen. Dazu umfasst die Steckverbindereinheit insbesondere die Steckeinheit, welche wenigstens ein Steckelement, insbesondere in Form eines Steckers, einer Kupplung und/oder einer Buchse, umfasst. Insbesondere ist die Steckeinheit im montierten Zustand, vorteilhaft vollständig, im Sensoraufnahmebereich angeordnet und zur Kopplung mit einer zu der Steckeinheit korrespondierenden weiteren Steckeinheit der Lenksensoreinheit, insbesondere wenigstens einem weiteren Steckelement, insbesondere in Form eines Steckers, einer Kupplung und/oder einer Buchse, der weiteren Steckeinheit, vorgesehen. Vorteilhaft ist die weitere Steckeinheit dabei fest und/oder unbeweglich relativ zu dem Lenkgetriebegehäuse gelagert. Zudem ist eine Steckrichtung zur Kopplung des Steckelements und des weiteren Steckelements vorzugsweise zumindest im Wesentlichen senkrecht zu einer Montagerichtung des Gehäusedeckels und/oder der axialen Richtung ausgerichtet. Insbesondere sind das Steckelement und das weitere Steckelement dabei derart relativ zueinander ausgerichtet, dass während des Montagevorgangs der Steckverbindereinheit eine automatische elektrische Kontaktierung der Lenksensoreinheit erfolgt. Der Ausdruck "zumindest im Wesentlichen senkrecht" soll dabei insbesondere eine Ausrichtung einer Richtung relativ zu einer Bezugsrichtung definieren, wobei die Richtung und die Bezugsrichtung, insbesondere in einer Ebene betrachtet, einen Winkel insbesondere zwischen 82° und 98°, vorteilhaft zwischen 85° und 95° und besonders bevorzugt zwischen 88° und 92° einschließen. Des Weiteren soll unter einer "Trägereinheit" insbesondere eine, vorteilhaft zumindest in dem vormontierten Zustand der Steckverbindereinheit mechanisch mit der Steckeinheit gekoppelte Einheit verstanden werden, welche insbesondere dazu vorgesehen ist, wenigstens einen Teil einer Gewichtskraft der Steckeinheit aufzunehmen und die Steckeinheit zumindest beim Montagevorgang der Steckverbindereinheit mechanisch zu stabilisieren, insbesondere um eine Kopplung zwischen dem Steckelement und dem weiteren Steckelement zu ermöglichen. Zur Kopplung der Trägereinheit und der Steckeinheit umfasst die Trägereinheit dabei insbesondere wenigstens ein Kopplungselement und die Steckeinheit wenigstens ein zu dem Kopplungselement korrespondierendes weiteres Kopplungselement. Unter einer "Entkoppeleinheit" soll ferner insbesondere eine, insbesondere mit der Steckverbindereinheit, der Lenksensoreinheit und/oder dem Lenkgetriebegehäuse in Wirkverbindung stehende, Einheit verstanden werden, welche dazu vorgesehen ist, bei dem Montagevorgang der Steckverbindereinheit die, insbesondere externe, Kraft, insbesondere Steckkraft und/oder Drehkraft, auf die Steckeinheit und/oder die Trägereinheit zu übertragen, insbesondere derart dass sich die Verbindung zwischen der Steckeinheit und der Trägereinheit beim Montagevorgang der Steckverbindereinheit automatisch und/oder selbsttätig löst und insbesondere eine definierte Beweglichkeit der Steckeinheit, insbesondere relativ zu dem Lenkgetriebegehäuse, erreicht wird. Insbesondere kann die Entkoppeleinheit dazu auch Teile der Steckverbindereinheit, der Lenksensoreinheit und/oder des Lenkgetriebegehäuses umfassen oder ausschließlich aus Teilen der Steckverbindereinheit, der Lenksensoreinheit und/oder des Lenkgetriebegehäuses gebildet sein.

Ferner wird vorgeschlagen, dass die Steckeinheit und die Trägereinheit kraft- und/oder formschlüssig miteinander verbunden sind, wodurch insbesondere eine wiederverwertbare Steckverbindereinheit erreicht werden kann.

In diesem Zusammenhang wird zudem vorgeschlagen, dass die Steckeinheit und die Trägereinheit mittels einer Rastverbindung und/oder einer Steck-Drehverbindung, vorteilhaft in Form einer Bajonettverbindung, miteinander verbunden sind. Insbesondere sind die Kopplungselemente in diesem Fall als Rastelemente und/oder als Bolzen-Nut-Elemente ausgebildet. Hierdurch kann insbesondere eine vorteilhaft einfache Entkopplung, insbesondere mittels einer linearen Bewegung und/oder einer Drehbewegung, erreicht werden.

Gemäß einer Ausgestaltung der Erfindung wird vorgeschlagen, dass die bei dem Montagevorgang der Steckverbindereinheit ausgeübte Kraft zum Lösen der Verbindung zwischen der Steckeinheit und der Trägereinheit zumindest eine durch eine lineare Steckbewegung der Steckverbindereinheit bewirkte und insbesondere in die Steckrichtung wirkende Steckkraftkomponente umfasst. Insbesondere kann die bei dem Montagevorgang der Steckverbindereinheit ausgeübte Kraft zum Lösen der Verbindung zwischen der Steckeinheit und der Trägereinheit dabei auch ausschließlich die Steckkraftkomponente umfassen. Hierdurch kann insbesondere eine vorteilhaft schnelle und/oder intuitive Montage erreicht werden.

Alternativ oder zusätzlich wird vorgeschlagen, dass die bei dem Montagevorgang der Steckverbindereinheit ausgeübte Kraft zum Lösen der Verbindung zwischen der Steckeinheit und der Trägereinheit zumindest eine durch eine Drehbewegung der Steckverbindereinheit und insbesondere der Trägereinheit bewirkte und insbesondere zumindest im Wesentlichen senkrecht zur Steckrichtung wirkende Drehkraftkomponente umfasst. Insbesondere kann die bei dem Montagevorgang der Steckverbindereinheit ausgeübte Kraft zum Lösen der Verbindung zwischen der Steckeinheit und der Trägereinheit dabei auch ausschließlich die Drehkraftkomponente umfassen. Hierdurch kann insbesondere eine vorteilhaft sichere Entkopplung erreicht werden, welche vorteilhaft auch von außen wahrnehmbar ist.

Ferner könnte die Entkoppeleinheit beispielsweise wenigstens ein, insbesondere zusätzliches, Entkoppelelement, beispielsweise eine Erhöhung, eine Vertiefung und/oder ein Stabelement, umfassen, welches dazu vorgesehen ist, die Steckeinheit und/oder die Trägereinheit bei dem Steckvorgang zu kontaktieren, um die bei dem Montagevorgang der Steckverbindereinheit ausgeübte Kraft auf die Steckeinheit und/oder die Trägereinheit zu übertragen. Alternativ oder zusätzlich wird gemäß einer bevorzugten Ausgestaltung der Erfindung jedoch vorgeschlagen, dass die Entkoppeleinheit zumindest teilweise einstückig mit der Lenksensoreinheit und/oder dem Lenkgetriebegehäuse ausgebildet ist. Darunter, dass ein Objekt mit einem weiteren Objekt "zumindest teilweise einstückig ausgebildet" ist soll in diesem Zusammenhang insbesondere verstanden werden, dass die Objekte zumindest ein gemeinsames Bauteil aufweisen und/oder zumindest ein Bauteil des Objekts und/oder das Objekt einstückig mit zumindest einem Bauteil des weiteren Objekts und/oder dem weiteren Objekt verbunden und/oder ausgebildet ist. Unter "einstückig" soll in diesem Zusammenhang insbesondere zumindest stoffschlüssig verbunden und/oder miteinander ausgebildet verstanden werden. Der Stoffschluss kann beispielsweise durch einen Klebeprozess, einen Anspritzprozess, einen Schweißprozess, einen Lötprozess und/oder einen anderen Prozess hergestellt werden. Vorteilhaft soll unter einstückig jedoch aus einem Stück und/oder in einem Stück geformt verstanden werden. Vorzugsweise wird dieses eine Stück aus einem einzelnen Rohling, einer Masse und/oder einem Guss, wie beispielsweise in einem Extrusionsverfahren und/oder einem Spritzgussverfahren hergestellt. Hierdurch kann insbesondere eine vorteilhaft kompakte Ausgestaltung erreicht werden

Bevorzugt wird ferner vorgeschlagen, dass die Entkoppeleinheit wenigstens ein an dem Lenkgetriebegehäuse angeordnetes Entkoppelelement umfasst, wodurch insbesondere eine besonders einfache und/oder effiziente Kraftübertragung erreicht werden kann. Vorteilhaft ist das Entkoppelelement dabei als Anlaufschräge ausgebildet und im Bereich der Kontaktierungsausnehmung des Lenkgetriebegehäuses angeordnet.

Alternativ oder zusätzlich wird vorgeschlagen, dass die Entkoppeleinheit wenigstens ein weiteres Entkoppelelement umfasst, welches Teil einer zu der Steckeinheit korrespondierenden weiteren Steckeinheit der Lenksensoreinheit, insbesondere der bereits zuvor genannten weiteren Steckeinheit, ist. Vorteilhaft ist das weitere Entkoppelelement dabei dazu vorgesehen, zum Lösen der Verbindung zwischen der Steckeinheit und der Trägereinheit die Steckeinheit beim Montagevorgang der Steckverbindereinheit zu kontaktieren, insbesondere derart, dass die beim Montagevorgang der Steckverbindereinheit ausgeübte Kraft, vorteilhaft Drehkraft, über die Steckeinheit auf die Kopplungselemente übertragen wird. Hierdurch kann insbesondere eine nahezu bauraumneutrale Ausgestaltung erreicht werden.

Ferner wird vorgeschlagen, dass die Steckeinheit wenigstens ein Steckelement, insbesondere das bereits zuvor genannte Steckelement, und wenigstens ein elektrisches Leitungselement, insbesondere ein Kabel, zur flexiblen Verbindung des Steckelements mit der Trägereinheit umfasst. Hierdurch ist das Steckelement insbesondere während der Montage und/oder im Betrieb der Lenkvorrichtung vorteilhaft beweglich, wodurch vorteilhaft Toleranzen und/oder Bewegungen ausgeglichen werden können.

Erfindungsgemäß umfasst die Steckeinheit zur Verbindung mit der Trägereinheit und/oder die Trägereinheit zur Verbindung mit der Steckeinheit wenigstens ein elastisches Ausgleichselement, welches dazu vorgesehen ist, wenigstens ein Steckelement der Steckeinheit, insbesondere das bereits zuvor genannte Steckelement, zumindest während des Montagevorgangs der Steckverbindereinheit, insbesondere in Steckrichtung, federnd zu lagern. Unter einem "Ausgleichselement" soll dabei insbesondere ein, insbesondere mit der Trägereinheit und/oder der Steckeinheit in Wirkverbindung stehendes, Element verstanden werden, welches dazu vorgesehen ist, eine Kraft, vorteilhaft eine Druckkraft, auf das wenigstens eine Steckelement auszuüben und/oder zu übertragen. Bevorzugt ist das Ausgleichselement dabei zumindest dazu vorgesehen, bei dem Montagevorgang der Steckverbindereinheit auftretende Kräfte auszugleichen und/oder derart auf das Steckelement zu übertragen, dass eine Kopplung zwischen dem Steckelement und dem weiteren Steckelement und hierdurch eine direkte und/oder automatische elektrische Kontaktierung der Lenksensoreinheit beim Montagevorgang der Steckverbindereinheit erfolgt. Zudem ist das Ausgleichselement vorteilhaft dazu vorgesehen, das Steckelement bei einer Kopplung der Steckelemente zu stabilisieren und/oder in einer definierten und/oder festgelegten Ausrichtung zu halten. Bevorzugt ist dabei wenigstens eines der Kopplungselemente an dem Ausgleichselement angeordnet. Das Ausgleichselement könnte beispielsweise als Gummielement, als Elastomerelement, als Silikonelement und/oder als Gelelement ausgebildet sein. Bevorzugt ist das Ausgleichselement jedoch als Federelement, insbesondere als Zug- und/oder Druckfeder und besonders bevorzugt als Metallfeder, ausgebildet. Unter einem "elastischen Objekt" soll ferner insbesondere ein Objekt verstanden werden, das zumindest einen Teilbereich und/oder zumindest einen Teil aufweist, der in einem normalen Betriebszustand zumindest in seiner Position um zumindest 1 mm, vorzugsweise um zumindest 2,5 mm und besonders bevorzugt um zumindest 5 mm veränderbar ist, und das insbesondere eine von einer Veränderung der Position abhängige und vorzugsweise zu der Veränderung proportionale Gegenkraft erzeugt, die insbesondere der Veränderung entgegen wirkt. Insbesondere ist das elastische Element wiederholt, insbesondere beschädigungsfrei, verformbar und strebt insbesondere nach einer Verformung selbstständig wieder einer Grundform zu. Hierdurch kann insbesondere ein vorteilhafter Montagevorgang erreicht werden, wobei insbesondere Toleranzen während des Montagevorgangs ausgeglichen werden können und/oder eine maximal zulässige Steckkraft in Abhängigkeit von einer maximalen Montagekraft variiert werden kann. Zudem kann insbesondere eine Beschädigung des Steckelements vermieden werden.

Des Weiteren wird vorgeschlagen, dass die Steckverbindereinheit zur Bereitstellung einer elektrischen Verbindung zwischen dem Sensoraufnahmebereich und einer Außenseite des Lenkgetriebegehäuses vorgesehen ist, wodurch insbesondere eine besonders einfache elektrische Kontaktierung der Lenksensoreinheit erreicht werden kann. Vorzugsweise ist die Trägereinheit dabei als Kabeldurchführung, insbesondere für ein Kabel der Steckeinheit und/oder ein Sensorkabel, ausgebildet und/oder weist eine Kabeldurchführung, insbesondere für das Kabel der Steckeinheit und/oder das Sensorkabel, auf, wobei das Kabel und/oder Sensorkabel beispielsweise dazu vorgesehen sein kann, eine elektrische Verbindung mit einem Steuergerät der Lenkvorrichtung herzustellen und/oder bereitzustellen. Besonders bevorzugt ist die Trägereinheit separat von dem Lenkgetriebegehäuse ausgebildet und im montierten Zustand fest mit dem Lenkgetriebegehäuse verbunden.

Eine besonders einfache und/oder sichere Entkopplung der Steckelemente kann insbesondere erreicht werden, wenn die Lenkvorrichtung eine, insbesondere an dem Lenkgetriebegehäuse und vorteilhaft an der Außenseite des Lenkgetriebegehäuses angeordnete, Führungseinheit aufweist, welche dazu vorgesehen ist, eine definierte Ausrichtung der Steckverbindereinheit relativ zu dem Lenkgetriebegehäuse bei dem Montagevorgang festzulegen und die Steckverbindereinheit relativ zu dem Lenkgetriebegehäuse bei dem Montagevorgang zu führen. Vorzugsweise umfasst die Führungseinheit dabei wenigstens ein als Führungsvertiefung und/oder Führungsnut ausgebildetes Führungselement.

Zudem betrifft die Erfindung ein Verfahren zur Montage einer Lenkvorrichtung, wobei die Lenkvorrichtung ein Lenkgetriebegehäuse, welches einen Sensoraufnahmebereich bereitstellt, eine in einem montierten Zustand in dem Sensoraufnahmebereich angeordnete Lenksensoreinheit, insbesondere zur Erfassung wenigstens einer Lenkinformation, insbesondere von einer um eine Lenkachse drehbar gelagerten Lenkwelle, und eine in einem montierten Zustand in einer, vorteilhaft in Umfangsrichtung geschlossenen, Kontaktierungsausnehmung, insbesondere einer Bohrung und/oder einer Durchbrechung, des Lenkgetriebegehäuses angeordnete Steckverbindereinheit zur, insbesondere direkten, elektrischen Kontaktierung der Lenksensoreinheit, insbesondere bei einem Montagevorgang der Steckverbindereinheit, umfasst, wobei die Steckverbindereinheit eine Steckeinheit zur Verbindung mit der Lenksensoreinheit und eine zumindest in einem vormontierten Zustand der Steckverbindereinheit mit der Steckeinheit gekoppelte Trägereinheit umfasst, und wobei die Steckereinheit zur Verbindung mit der Trägereinheit und/oder die Trägereinheit zur Verbindung mit der Steckereinheit wenigstens ein elastisches Ausgleichselement umfasst, welches dazu vorgesehen ist, wenigstens ein Steckelement der Steckeinheit zumindest während des Montagevorgangs der Steckverbindereinheit federnd zu lagern.

Es wird vorgeschlagen, dass eine bei einem Montagevorgang der Steckverbindereinheit ausgeübte Kraft, insbesondere mittels einer Entkoppeleinheit, derart auf die Steckeinheit und/oder die Trägereinheit übertragen wird, dass die Verbindung zwischen der Steckeinheit und der Trägereinheit beim Montagevorgang der Steckverbindereinheit gelöst wird. Hierdurch können insbesondere die bereits zuvor genannten Vorteile erreicht werden. Insbesondere kann dabei eine vorteilhaft sichere und/oder flexible Kontaktierung der Lenksensoreinheit mit einer definierten Steckkraft erreicht werden.

Vorzugsweise wird dabei in einem ersten Montageschritt zumindest aus der Steckeinheit und der Trägereinheit eine mechanisch miteinander gekoppelte, vormontierte Unterbaugruppe hergestellt, in einem zweiten Montageschritt zumindest aus der Lenksensoreinheit und der Lenkwelle eine vormontierte Lenksensorbaugruppe hergestellt, in einem dritten Montageschritt die vormontierte Lenksensorbaugruppe in die Montageöffnung des Lenkgetriebegehäuses eingesetzt, in einem vierten Montageschritt die Steckverbindereinheit in Form der vormontierten Unterbaugruppe in die Kontaktierungsausnehmung des Lenkgetriebegehäuses eingebracht, sodass eine direkte elektrische Kontaktierung der Lenksensoreinheit erreicht wird und gleichzeitig die beim Montagevorgang der Steckverbindereinheit ausgeübte Kraft, insbesondere mittels der Entkoppeleinheit, auf die Steckeinheit und/oder die Trägereinheit übertragen wird, insbesondere derart, dass sich die, insbesondere mechanische, Verbindung zwischen der Steckeinheit und der Trägereinheit, insbesondere automatisch und/oder selbsttätig, löst, und in einem fünften Montageschritt die Montageöffnung mittels des Gehäusedeckels verschlossen. Alternativ können dabei einzelne Montageschritte und/oder eine Abfolge der Montageschritte jedoch auch variieren.

Die Lenkvorrichtung, das Lenksystem, die Steckverbindereinheit und das Verfahren zur Montage der Lenkvorrichtung sollen hierbei nicht auf die oben beschriebene Anwendung und Ausführungsform beschränkt sein. Insbesondere können die Lenkvorrichtung, das Lenksystem, die Steckverbindereinheit und das Verfahren zur Montage der Lenkvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Aspekte der Erfindung. Der Fachmann wird diese Aspekte zweckmäßigerweise auch einzeln betrachten und zu sinnvollen weiteren Kombinationen zusammenfassen.

Es zeigen:
- Fig. 1: ein beispielhaftes Lenksystem mit einer Lenkvorrichtung in einer schematischen Darstellung,
- Fig. 2: die Lenkvorrichtung in einem montierten Zustand in einer perspektivischen Schnittdarstellung,
- Fig. 3a-b: Detaildarstellungen der Lenkvorrichtung gemäß Figur 2 in zwei verschiedenen Montagezuständen,
- Fig. 4a-b: eine Steckverbindereinheit und ein Lenkgetriebegehäuse der Lenkvorrichtung in perspektivischen Darstellungen,
- Fig. 5: ein beispielhaftes Ablaufdiagramm eines Verfahrens zur Montage der Lenkvorrichtung,
- Fig. 6a-b: ein weiteres Ausführungsbeispiel einer weiteren Lenkvorrichtung in einer perspektivischen Darstellung in zwei verschiedenen Montagezuständen,
- Fig. 7: ein Lenkgetriebegehäuse der Lenkvorrichtung aus den Figuren 6a-b in einer perspektivischen Darstellung und
- Fig. 8: ein weiteres Ausführungsbeispiel einer weiteren Lenkvorrichtung in einer perspektivischen Schnittdarstellung.

### Beschreibung der Ausführungsbeispiele

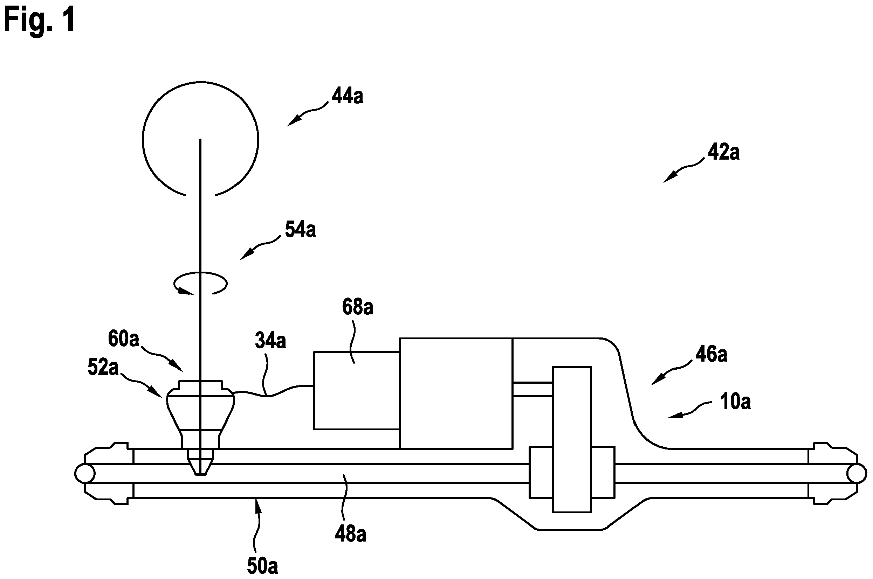

Figur 1 zeigt ein rein beispielhaftes Lenksystem 42a in einer schematischen Darstellung. Das Lenksystem 42a ist als elektrisch unterstütztes Lenksystem ausgebildet und weist demnach eine elektrische Hilfskraftunterstützung auf. Ferner ist das Lenksystem 42a zu einem Einsatz in einem Fahrzeug (nicht dargestellt), insbesondere einem Kraftfahrzeug, vorgesehen. Das Lenksystem 42a weist in einem eingebauten Zustand eine Wirkverbindung mit Fahrzeugrädern des Fahrzeugs auf und ist zur Beeinflussung einer Fahrtrichtung des Fahrzeugs vorgesehen. Prinzipiell ist natürlich auch denkbar, ein Lenksystem als hydraulisch unterstütztes Lenksystem, insbesondere mit einer hydraulischen Hilfskraftunterstützung, auszubilden.

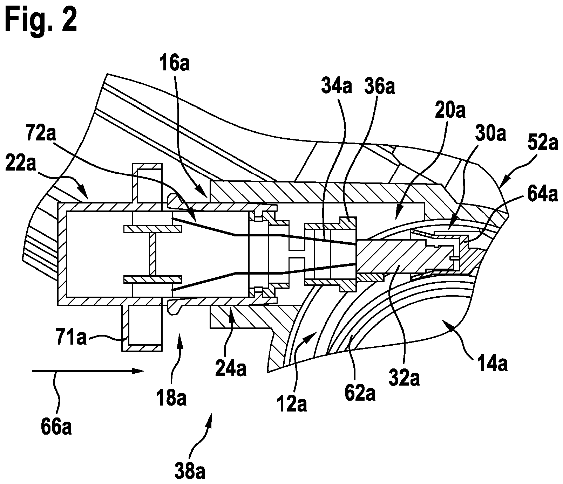

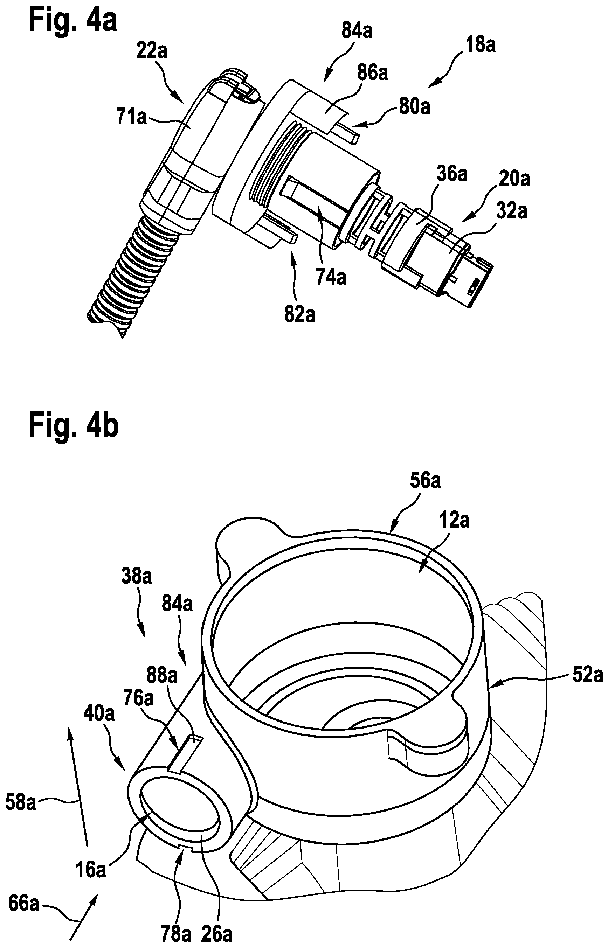

Das Lenksystem 42a weist eine Lenkvorrichtung auf. Die Lenkvorrichtung umfasst eine, im vorliegenden Fall beispielhaft als Lenkrad ausgebildete, Lenkhandhabe 44a zum Aufbringen eines manuellen Lenkmoments sowie ein an sich bekanntes Lenkgetriebe 46a, welches dazu vorgesehen ist, eine Lenkvorgabe an der Lenkhandhabe 44a in eine Lenkbewegung der Fahrzeugräder umzusetzen. Dazu umfasst das Lenkgetriebe 46a ein Lenkungsstellelement 48a sowie ein Lenkgetriebegehäuse 10a mit einem ersten Gehäuseabschnitt 50a für das Lenkungsstellelement 48a und mit einem zweiten Gehäuseabschnitt 52a, welcher einen Sensoraufnahmebereich 12a bereitstellt (vgl. insbesondere auch Figuren 2 und 4b).

Darüber hinaus umfasst die Lenkvorrichtung eine an sich bekannte Lenkwelle 54a. Die Lenkwelle 54a verbindet die Lenkhandhabe 44a mit dem Lenkgetriebe 46a, insbesondere dem Lenkungsstellelement 48a, und ist dazu in einem montierten Zustand zumindest teilweise in eine, insbesondere den Sensoraufnahmebereich 12a begrenzende, Montageöffnung 56a des Lenkgetriebegehäuses 10a und insbesondere des zweiten Gehäuseabschnitts 52a eingesetzt. Eine Längserstreckung der Lenkwelle 54a definiert dabei eine axiale Richtung 58a. Die Lenkwelle 54a ist drehbar um eine parallel zu der axialen Richtung 58a ausgerichtete Lenkachse gelagert. Ferner ist die Lenkwelle 54a mehrteilig ausgebildet. Die Lenkwelle 54a umfasst eine der Lenkhandhabe 44a zugeordnete Eingangswelle in Form einer Lenkspindel, eine dem Lenkgetriebe 46a zugeordnete und von der Eingangswelle getrennt ausgebildete Ausgangswelle in Form eines Lenkritzels und ein, vorteilhaft als Drehstab ausgebildetes, Torsionselement, welches die Eingangswelle mit der Ausgangswelle verbindet. Prinzipiell ist jedoch auch denkbar, eine Lenkwelle einstückig auszubilden.

Des Weiteren umfasst die Lenkvorrichtung einen Gehäusedeckel 60a. Der Gehäusedeckel 60a weist eine, beispielsweise mittels eines eingespritzten Dichtelements abgedichtete Durchtrittsöffnung für die Lenkwelle 54a auf. Der Gehäusedeckel 60a ist dazu vorgesehen, in einem montierten Zustand die Montageöffnung 56a des Lenkgetriebegehäuses 10a und somit den Sensoraufnahmebereich 12a in axialer Richtung 58a abzudecken und insbesondere fluiddicht zu verschließen.

Ferner weist die Lenkvorrichtung eine Lenksensoreinheit 14a auf. Die Lenksensoreinheit 14a ist im montierten Zustand in dem Sensoraufnahmebereich 12a angeordnet und umgreift dabei die Lenkwelle 54a in Umfangsrichtung. Im vorliegenden Fall ist die Lenksensoreinheit 14a dazu vorgesehen, anhand einer Verdrehung der Lenkwelle 54a wenigstens eine, insbesondere mit einer Betätigung der Lenkhandhabe 44a korrelierte, Lenkinformation, insbesondere einen Lenkwinkel und/oder ein Lenkmoment, zu erfassen. Dazu umfasst die Lenksensoreinheit 14a ein, insbesondere als Aufnahmegehäuse ausgebildetes, Sensorgehäuse 62a sowie wenigstens ein in dem Sensorgehäuse 62a angeordnetes Sensorelement (nicht dargestellt) zur Erfassung der Lenkinformation.

Zudem umfasst die Lenksensoreinheit 14a eine erste Steckeinheit 30a. Die erste Steckeinheit 30a ist in dem Sensorgehäuse 62a gelagert. Die erste Steckeinheit 30a ist dabei in einem montierten Zustand der Lenksensoreinheit 14a fest und/oder unbeweglich relativ zu dem Lenkgetriebegehäuse 10a angeordnet. Die erste Steckeinheit 30a umfasst ein erstes Steckelement 64a. Das erste Steckelement 64a ist elektrisch mit dem Sensorelement oder einem mit dem Sensorelement verbundenen Stanzgitter der Lenksensoreinheit 14a verbunden. Das erste Steckelement 64a ist im vorliegenden Fall beispielhaft als Kupplung und/oder Buchse ausgebildet. Alternativ könnte eine erste Steckeinheit jedoch auch ein als Stecker ausgebildetes erstes Steckelement und/oder mehrere erste Steckelemente umfassen.

Zur elektrischen Kontaktierung der Lenksensoreinheit 14a und insbesondere der ersten Steckeinheit 30a umfasst die Lenkvorrichtung zudem eine Steckverbindereinheit 18a (vgl. insbesondere auch Figur 4a). Die Steckverbindereinheit 18a ist separat von dem Lenkgetriebegehäuse 10a ausgebildet und im montierten Zustand fest mit dem Lenkgetriebegehäuse 10a und insbesondere dem zweiten Gehäuseabschnitt 52a verbunden. Die Steckverbindereinheit 18a ist dabei im montierten Zustand in einer Kontaktierungsausnehmung 16a des Lenkgetriebegehäuses 10a, insbesondere in Form einer Bohrung und/oder einer Durchbrechung, angeordnet. Die Steckverbindereinheit 18a ist folglich zumindest teilweise außerhalb des Lenkgetriebegehäuses 10a angeordnet und kann bei einem Montagevorgang, beispielsweise von einem Monteur und/oder maschinell, mit dem Lenkgetriebegehäuse 10a verbunden werden, insbesondere indem die Steckverbindereinheit 18a, vorteilhaft in einer linearen Bewegung, in die Kontaktierungsausnehmung 16a eingebracht wird. Die Steckverbindereinheit 18a ist ferner als Kabeldurchführung ausgebildet und zur Bereitstellung einer elektrischen Verbindung zwischen dem Sensoraufnahmebereich 12a und einer Außenseite 38a des Lenkgetriebegehäuses 10a vorgesehen.

Zur elektrischen Verbindung mit der Lenksensoreinheit 14a umfasst die Steckverbindereinheit 18a eine zweite Steckeinheit 20a, welche mit der ersten Steckeinheit 30a koppelbar ist. Dazu umfasst die zweite Steckeinheit 20a ein zweites Steckelement 32a. Das zweite Steckelement 32a ist korrespondierend zu dem ersten Steckelement 64a ausgebildet. Das zweite Steckelement 32a ist im vorliegenden Fall beispielhaft als Stecker, insbesondere als Standard-Stecker, ausgebildet. Ferner ist das zweite Steckelement 32a in einer zu der axialen Richtung 58a senkrecht ausgerichteten Steckrichtung 66a mit dem ersten Steckelement 64a koppelbar. Das zweite Steckelement 32a ist dazu vorgesehen, in Steckrichtung 66a mit dem ersten Steckelement 64a verbunden zu werden und hierdurch eine elektrische Kontaktierung der Lenksensoreinheit 14a zu ermöglichen. Alternativ könnte eine zweite Steckeinheit jedoch auch ein als Kupplung und/oder Buchse ausgebildetes zweites Steckelement und/oder mehrere zweite Steckelemente umfassen. Zudem umfasst die zweite Steckeinheit 20a wenigstens ein elektrisches Leitungselement 34a. Das elektrische Leitungselement 34a ist flexibel und im vorliegenden Fall insbesondere als Kabel ausgebildet. Das elektrische Leitungselement 34a ist als Sensorkabel ausgebildet und zur flexiblen Verbindung des zweiten Steckelements 32a beispielsweise mit einem Steuergerät 68a der Lenkvorrichtung vorgesehen. Alternativ könnte eine Steckverbindereinheit jedoch auch wenigstens ein, insbesondere im Bereich einer Außenseite eines Lenkgetriebegehäuses angeordnetes, Sensorkabelsteckelement aufweisen, welches zur Kopplung eines, insbesondere zusätzlichen, Sensorkabels vorgesehen ist.

Des Weiteren umfasst die zweite Steckeinheit 20a im vorliegenden Fall ein elastisches Ausgleichselement 36a. Das Ausgleichselement 36a ist dem zweiten Steckelement 32a zugeordnet und steht mit diesem in Wirkverbindung. Im vorliegenden Fall kontaktiert das Ausgleichselement 36a das zweite Steckelement 32a. Das Ausgleichselement 36a ist an dem zweiten Steckelement 32a befestigt. Das Ausgleichselement 36a umgreift dabei das elektrische Leitungselement 34a zu wenigstens einem Großteil und vorteilhaft vollständig. Das Ausgleichselement 36a ist ferner als Federelement, insbesondere als Zug- und/oder Druckfeder, ausgebildet. Das Ausgleichselement 36a ist dazu vorgesehen, das zweite Steckelement 32a zumindest während des Montagevorgangs der Steckverbindereinheit 18a in Steckrichtung 66a federnd zu lagern. Dabei ist das Ausgleichselement 36a dazu vorgesehen, das zweite Steckelement 32a mit einer in Steckrichtung 66a wirkenden Kraft zu beaufschlagen und eine bei einer Kopplung der Steckelemente 32a, 64a auf das zweite Steckelement 32a einwirkende Steckkraft zu dämpfen und/oder auszugleichen. Zudem ist das Ausgleichselement 36a dazu vorgesehen, das zweite Steckelement 32a bei einer Kopplung der Steckelemente 32a, 64a zu stabilisieren und in einer definierten und/oder festgelegten Ausrichtung zu halten, um eine Kopplung zwischen dem ersten Steckelement 64a und dem zweiten Steckelement 32a zu ermöglichen und vorteilhaft Toleranzen während des Montagevorgangs der Steckverbindereinheit 18a auszugleichen. Alternativ könnte ein Ausgleichselement jedoch auch einem von einer zweiten Steckeinheit abweichenden Bauteil einer Steckverbindereinheit zugeordnet sein, wie beispielsweise einer Trägereinheit. Zudem ist denkbar, mehrere Ausgleichselemente vorzusehen. Ferner könnte ein Ausgleichselement auch derart angeordnet sein, dass es ein zweites Steckelement nicht direkt kontaktiert. Auch könnte ein Ausgleichselement als ein von einem Federelement abweichendes elastisches Element ausgebildet sein. Prinzipiell ist ferner auch denkbar, auf ein Ausgleichselement vollständig zu verzichten.

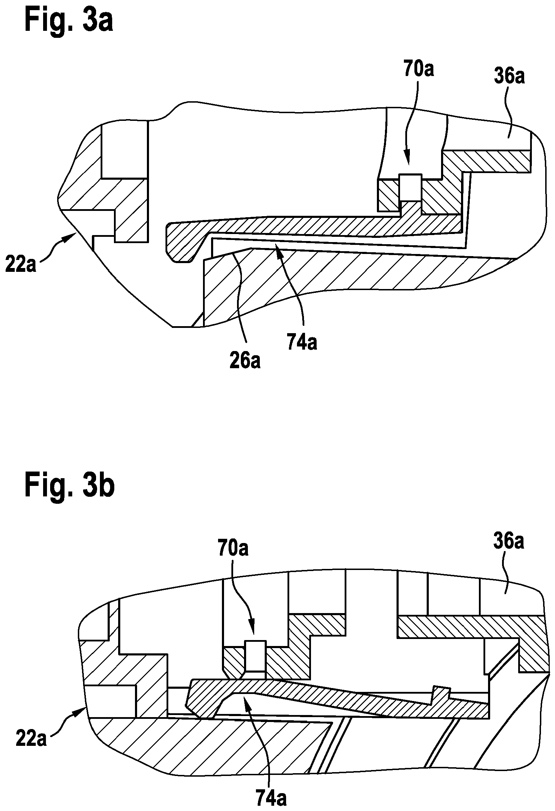

Darüber hinaus umfasst die zweite Steckeinheit 20a wenigstens ein Kopplungselement 70a (vgl. insbesondere auch Figuren 3a und 3b). Im vorliegenden Fall weist die zweite Steckeinheit 20a mehrere Kopplungselemente 70a auf, wobei in den Figuren der Übersichtlichkeit halber lediglich eines der Kopplungselemente 70a dargestellt ist. Die Kopplungselemente 70a sind an dem Ausgleichselement 36a, insbesondere einer dem zweiten Steckelement 32a abgewandten Rückseite des Ausgleichselements 36a, angeordnet. Die Kopplungselemente 70a sind zudem als Rastelemente, im vorliegenden Fall insbesondere als Rastausnehmung und/oder Rastnut, ausgebildet. Prinzipiell ist jedoch auch denkbar, ein Kopplungselement an einem zweiten Steckelement anzuordnen. Ferner könnte wenigstens ein Kopplungselement prinzipiell auch als Rastarm, als Rasthebel und/oder als Rasthaken ausgebildet sein.

Des Weiteren umfasst die Steckverbindereinheit 18a eine Trägereinheit 22a (vgl. insbesondere auch Figur 4a). Die Trägereinheit 22a umfasst einen Trägergrundkörper 71a. Der Trägergrundkörper 71a kontaktiert im montierten Zustand das Lenkgetriebegehäuse 10a und verschließt die Kontaktierungsausnehmung 16a fluiddicht. Der Trägergrundkörper 71a begrenzt zudem einen Kabeldurchführungskanal 72a für das elektrische Leitungselement 34a. Durch das elektrische Leitungselement 34a ist das zweite Steckelement 32a dabei flexibel mit der Trägereinheit 22a verbunden. Ferner ist die Trägereinheit 22a zumindest in einem vormontierten Zustand der Steckverbindereinheit 18a mechanisch mit der zweiten Steckeinheit 20a gekoppelt. Die Trägereinheit 22a ist dabei kraft- und/oder formschlüssig mit der zweiten Steckeinheit 20a verbunden. Im vorliegenden Fall ist die Trägereinheit 22a mittels einer Rastverbindung mit der zweiten Steckeinheit 20a verbunden. Die Trägereinheit 22a ist dazu vorgesehen, wenigstens einen Teil einer Gewichtskraft der zweiten Steckeinheit 20a aufzunehmen und die zweite Steckeinheit 20a zumindest beim Montagevorgang der Steckverbindereinheit 18a mechanisch zu stabilisieren, insbesondere um eine Kopplung zwischen den Steckelementen 32a, 64a zu ermöglichen.

Zur Kopplung mit der zweiten Steckeinheit 20a umfasst die Trägereinheit 22a wenigstens ein weiteres Kopplungselement 74a (vgl. insbesondere auch Figuren 3a und 3b). Im vorliegenden Fall weist die Trägereinheit 22a mehrere weitere Kopplungselemente 74a auf, wobei in den Figuren der Übersichtlichkeit halber lediglich eines der weiteren Kopplungselemente 74a dargestellt ist. Die weiteren Kopplungselemente 74a sind an dem Trägergrundkörper 71a angeordnet. Die weiteren Kopplungselemente 74a sind korrespondierend zu den Kopplungselementen 70a ausgebildet. Die weiteren Kopplungselemente 74a sind als Rasthebel ausgebildet und in einer zu der Steckrichtung 66a senkrecht ausgerichteten Richtung auslenkbar. Die weiteren Kopplungselemente 74a sind dazu vorgesehen, mit den Kopplungselementen 70a zusammenzuwirken, um eine Kopplung zwischen der Trägereinheit 22a und der zweiten Steckeinheit 20a und im vorliegenden Fall insbesondere dem Ausgleichselement 36a zu ermöglichen. Im gekoppelten Zustand weisen die weiteren Kopplungselemente 74a dabei in die senkrecht zu der Steckrichtung 66a ausgerichtete Richtung eine Vorspannung auf, wodurch eine sichere Kopplung zwischen der Trägereinheit 22a und der zweiten Steckeinheit 20a erreicht werden kann. Prinzipiell ist jedoch auch denkbar, wenigstens ein weiteres Kopplungselement als Rastvertiefung und/oder Rastnut auszubilden.

Darüber hinaus umfasst die Lenkvorrichtung eine Entkoppeleinheit 24a. Die Entkoppeleinheit 24a steht mit dem Lenkgetriebegehäuse 10a und der Steckverbindereinheit 18b in Wirkverbindung. Im vorliegenden Fall ist die Entkoppeleinheit 24a einstückig mit dem Lenkgetriebegehäuse 10a ausgebildet. Die Entkoppeleinheit 24a ist dazu vorgesehen, eine bei einem Montagevorgang der Steckverbindereinheit 18a ausgeübte Kraft, im vorliegenden Fall insbesondere eine lineare Steckkraft, derart auf die Trägereinheit 22a und insbesondere die weiteren Kopplungselemente 74a zu übertragen, dass sich die Verbindung zwischen der zweiten Steckeinheit 20a und der Trägereinheit 22a beim Montagevorgang der Steckverbindereinheit 18a löst. Die bei dem Montagevorgang der Steckverbindereinheit 18a ausgeübte Kraft ist dabei im vorliegenden Fall ausschließlich durch eine lineare Steckbewegung der Steckverbindereinheit 18a bewirkt. Folglich umfasst die bei dem Montagevorgang der Steckverbindereinheit 18a ausgeübte Kraft zum Lösen der Verbindung zwischen der zweiten Steckeinheit 20a und der Trägereinheit 22a eine durch eine lineare Steckbewegung der Steckverbindereinheit 18a bewirkte Steckkraftkomponente.

Dabei umfasst die Entkoppeleinheit 24a wenigstens ein an dem Lenkgetriebegehäuse 10a angeordnetes Entkoppelelement 26a (vgl. insbesondere auch Figur 3a). Das Entkoppelelement 26a ist im Bereich der Kontaktierungsausnehmung 16a des Lenkgetriebegehäuses 10a angeordnet. Im vorliegenden Fall ist das Entkoppelelement 26a als Anlaufschräge ausgebildet. Das Entkoppelelement 26a ist dazu vorgesehen, beim Montagevorgang der Steckverbindereinheit 18a mit den weiteren Kopplungselementen 74a zusammenzuwirken und die weiteren Kopplungselemente 74a in der zu der Steckrichtung 66a senkrecht ausgerichteten Richtung auszulenken, wodurch sich die Verbindung zwischen der zweiten Steckeinheit 20a und der Trägereinheit 22a beim Montagevorgang der Steckverbindereinheit 18a automatisch und/oder selbsttätig löst. Alternativ oder zusätzlich könnte eine Entkoppeleinheit jedoch auch dazu vorgesehen sein, eine bei einem Montagevorgang einer Steckverbindereinheit ausgeübte Kraft auf eine zweite Steckeinheit zu übertragen. Zudem könnte eine Entkoppeleinheit prinzipiell auch mehrere Entkoppelelemente umfassen.

Zudem kann die Lenkvorrichtung eine Führungseinheit 40a umfassen (vgl. insbesondere Figur 4b). Die Führungseinheit 40a ist an dem Lenkgetriebegehäuse 10a angeordnet. Im vorliegenden Fall ist die Führungseinheit 40a an der Außenseite 38a des Lenkgetriebegehäuses 10a und insbesondere im Bereich der Kontaktierungsausnehmung 16a des Lenkgetriebegehäuses 10a angeordnet. Die Führungseinheit 40a ist dazu vorgesehen, eine definierte Ausrichtung der Steckverbindereinheit 18a relativ zu dem Lenkgetriebegehäuse 10a bei dem Montagevorgang festzulegen und die Steckverbindereinheit 18a relativ zu dem Lenkgetriebegehäuse 10a bei dem Montagevorgang, insbesondere in einer linearen Bewegung, zu führen.

Dazu umfasst die Führungseinheit 40a wenigstens ein Führungselement 76a, 78a. Im vorliegenden Fall umfasst die Führungseinheit 40a zwei, sich gegenüberliegende Führungselemente 76a, 78a. Die Führungselemente 76a, 78a sind dabei jeweils als Führungsvertiefung und/oder Führungsnut ausgebildet und weisen einen linearen Verlauf in Steckrichtung 66a auf. Die Führungselemente 76a, 78a sind dazu vorgesehen, zur Führung der Steckverbindereinheit 18a bei dem Montagevorgang mit weiteren Führungselementen 80a, 82a der Steckverbindereinheit 18a, insbesondere der Trägereinheit 22a, zusammenzuwirken. Alternativ könnte eine Führungseinheit jedoch auch genau ein an einem Lenkgetriebegehäuse angeordnetes Führungselement umfassen. Zudem ist denkbar, auf eine Führungseinheit vollständig zu verzichten.

Zudem weist die Lenkvorrichtung eine Befestigungseinheit 84a auf, welche zur Befestigung der Steckverbindereinheit 18a, insbesondere der Trägereinheit 22a, an dem Lenkgetriebegehäuse 10a vorgesehen ist. Die Befestigungseinheit 84a umfasst dazu wenigstens ein, der Steckverbindereinheit 18a zugeordnetes, erstes Befestigungselement 86a und wenigstens ein, dem Lenkgetriebegehäuse 10a zugeordnetes, zweites Befestigungselement 88a, welches korrespondierend zu dem ersten Befestigungselement 86a ausgebildet ist. Grundsätzlich kann die Befestigungseinheit 84a dabei eine beliebige Anzahl an Befestigungselementen 86a, 88a umfassen. Bevorzugt umfasst die Befestigungseinheit 84a jedoch zumindest zwei, der Steckverbindereinheit 18a zugeordnete, erste Befestigungselemente 86a sowie zumindest zwei, dem Lenkgetriebegehäuse 10a zugeordnete, zweite Befestigungselemente 88a. Die Befestigungselemente 86a, 88a sind im vorliegenden Fall beispielhaft als Rastelemente ausgebildet. Die Befestigungselemente 86a, 88a sind dazu vorgesehen, die Steckverbindereinheit 18a in einer Endmontageposition zu fixieren.

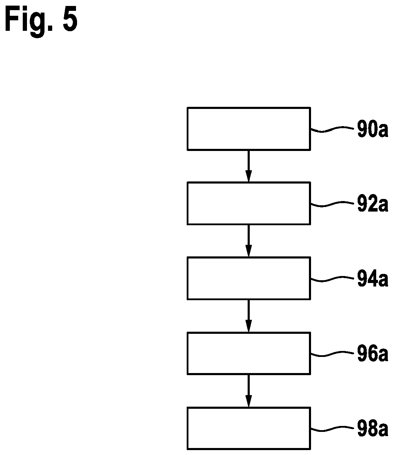

Im Folgenden wird unter Verweis auf Figur 5 ein beispielhaftes Verfahren zur Montage der Lenkvorrichtung beschrieben.

In einem ersten Montageschritt 90a wird zumindest aus der zweiten Steckeinheit 20a und der Trägereinheit 22a eine mechanisch miteinander gekoppelte, vormontierte Unterbaugruppe hergestellt.

Zudem wird in einem zweiten Montageschritt 92a zumindest aus der Lenksensoreinheit 14a und der Lenkwelle 54a eine vormontierte Lenksensorbaugruppe hergestellt.

In einem dritten Montageschritt 94a wird die vormontierte Lenksensorbaugruppe in die Montageöffnung 56a des Lenkgetriebegehäuses 10a eingesetzt, wobei die Lenkwelle 56a direkt bis zu einer Endposition eingeschoben wird.

In einem vierten Montageschritt 96a wird die Steckverbindereinheit 18a in Form der vormontierten Unterbaugruppe in die Kontaktierungsausnehmung 16a des Lenkgetriebegehäuses 10a eingebracht, wobei durch die Führungseinheit 40a eine definierte Ausrichtung der Steckverbindereinheit 18a relativ zu dem Lenkgetriebegehäuse 10a festlegt wird und eine lineare Führung der Steckverbindereinheit 18a relativ zu dem Lenkgetriebegehäuse 10a erfolgt, wodurch eine direkte elektrische Kontaktierung der Lenksensoreinheit 14a erreicht werden kann. Vorteilhaft wird dabei beim Montagevorgang der Steckverbindereinheit 18a das zweite Steckelement 32a derart bis zu einem Endanschlag gefügt, dass das Ausgleichselement 36a in Steckrichtung 66a gestaucht wird. Gleichzeitig wird die beim Montagevorgang der Steckverbindereinheit 18a ausgeübte Kraft, insbesondere mittels der Entkoppeleinheit 24a, derart auf die Trägereinheit 22a und insbesondere die weiteren Kopplungselemente 74a übertragen, dass sich die Verbindung zwischen der zweiten Steckeinheit 20a und der Trägereinheit 22a automatisch und/oder selbsttätig löst. In der Endmontageposition wird die Steckverbindereinheit 18a dann mittels der Befestigungselemente 86a, 88a an dem Lenkgetriebegehäuse 10a fixiert.

In einem fünften Montageschritt 98a wird die Montageöffnung 56a mittels des Gehäusedeckels 60a verschlossen.

Das beispielhafte Ablaufdiagramm in Figur 5 soll dabei insbesondere lediglich beispielhaft ein Verfahren zur Montage der Lenkvorrichtung beschreiben. Insbesondere können einzelne Montageschritte und/oder eine Abfolge der Montageschritte variieren. Zudem könnte prinzipiell auf den ersten Montageschritt 90a und/oder den zweiten Montageschritt 92a auch verzichtet werden, beispielsweise falls die vormontierte Unterbaugruppe und/oder die vormontierte Lenksensorbaugruppe bereits käuflich erwerblich ist/sind. Ferner könnte im vierten Montageschritt 96a auch eine von einer linearen Führung abweichende Führung der Steckverbindereinheit 18a erfolgen und/oder eine beim Montagevorgang der Steckverbindereinheit 18a ausgeübte Kraft, insbesondere mittels der Entkoppeleinheit 24a, auf die zweite Steckeinheit 20a übertragen werden.

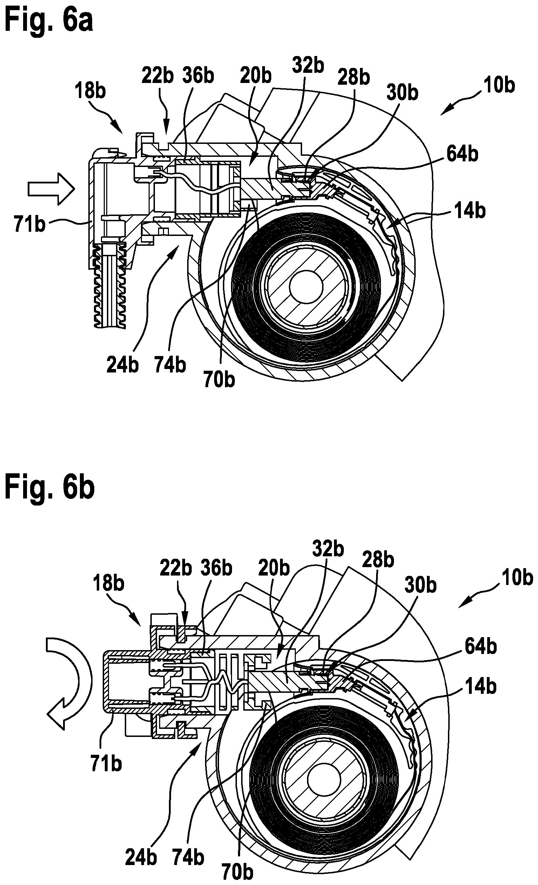

In den Figuren 6a bis 8 sind weitere Ausführungsbeispiele der Erfindung gezeigt. Die nachfolgende Beschreibung und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6a bis 8 ist der Buchstabe a durch die Buchstaben b und c ersetzt.

In den Figuren 6a bis 7 ist ein weiteres Ausführungsbeispiel der Erfindung gezeigt. Dem Ausführungsbeispiel der Figuren 6a bis 7 ist der Buchstabe b nachgestellt. Das weitere Ausführungsbeispiel der Figuren 6a bis 7 unterscheidet sich von dem vorherigen Ausführungsbeispiel zumindest im Wesentlichen durch eine Ausgestaltung einer Verbindung zwischen einer zweiten Steckeinheit 20b und einer Trägereinheit 22b einer Steckverbindereinheit 18b einer Lenkvorrichtung.

Im vorliegenden Fall sind die zweite Steckeinheit 20b und die Trägereinheit 22b mittels einer Steck-Drehverbindung miteinander verbunden.

Die zweite Steckeinheit 20b ist dabei frei von einem Ausgleichselement. Demzufolge sind Kopplungselemente 70b der zweiten Steckeinheit 20b direkt an einem zweiten Steckelement 32b der zweiten Steckeinheit 20b angeordnet. Die Kopplungselemente 70b sind zudem als Bolzen-Nut-Elemente ausgebildet.

Ferner umfasst die Trägereinheit 22b ein elastisches Ausgleichselement 36b. Im vorliegenden Fall kontaktiert das Ausgleichselement 36b einen Trägergrundkörper 71b und das zweite Steckelement 32b. Das Ausgleichselement 36b ist an dem Trägergrundkörper 71b befestigt. Weitere Kopplungselemente 74b der Trägereinheit 22b sind dabei an dem Ausgleichselement 36b, insbesondere einer dem zweiten Steckelement 32b zugwandten Vorderseite des Ausgleichselements 36b, angeordnet. Die weiteren Kopplungselemente 74b sind zudem als Bolzen-Nut-Elemente ausgebildet.

Darüber hinaus steht eine Entkoppeleinheit 24b mit einer Lenksensoreinheit 14b in Wirkverbindung. Die Entkoppeleinheit 24b ist einstückig mit der Lenksensoreinheit 14b, insbesondere einer ersten Steckeinheit 30b der Lenksensoreinheit 14b, ausgebildet. Die Entkoppeleinheit 24b ist dazu vorgesehen, eine bei einem Montagevorgang der Steckverbindereinheit 18b ausgeübte Kraft, im vorliegenden Fall insbesondere eine Drehkraft, über die erste Steckeinheit 30b und die zweite Steckeinheit 20b derart auf die Trägereinheit 22b und insbesondere die weiteren Kopplungselemente 74b zu übertragen, dass sich die Verbindung zwischen der zweiten Steckeinheit 20b und der Trägereinheit 22b beim Montagevorgang der Steckverbindereinheit 18b löst. Die bei dem Montagevorgang der Steckverbindereinheit 18b ausgeübte Kraft ist dabei im vorliegenden Fall durch eine Drehbewegung der Steckverbindereinheit 18b, insbesondere um einen Winkel von 90°, bewirkt. Folglich umfasst die bei dem Montagevorgang der Steckverbindereinheit 18b ausgeübte Kraft zum Lösen der Verbindung zwischen der zweiten Steckeinheit 20b und der Trägereinheit 22b eine durch eine Drehbewegung der Steckverbindereinheit 18b bewirkte Drehkraftkomponente.

Dabei umfasst die Entkoppeleinheit 24b wenigstens ein an der Lenksensoreinheit 14b angeordnetes Entkoppelelement 28b, welches Teil der ersten Steckeinheit 30b ist. Im vorliegenden Fall entspricht das Entkoppelelement 28b dabei einer eine Haltekraft festlegenden Wandung eines ersten Steckelements 64b der ersten Steckeinheit 30b. Im vorliegenden Fall ist das Entkoppelelement 28b dazu vorgesehen, beim Montagevorgang der Steckverbindereinheit 18b mit dem zweiten Steckelement 32b zusammenzuwirken und das zweite Steckelement 32b bei der Drehbewegung der Steckverbindereinheit 18b festzuhalten, wodurch sich die Verbindung zwischen der zweiten Steckeinheit 20b und der Trägereinheit 22b beim Montagevorgang der Steckverbindereinheit 18b automatisch und/oder selbsttätig löst.

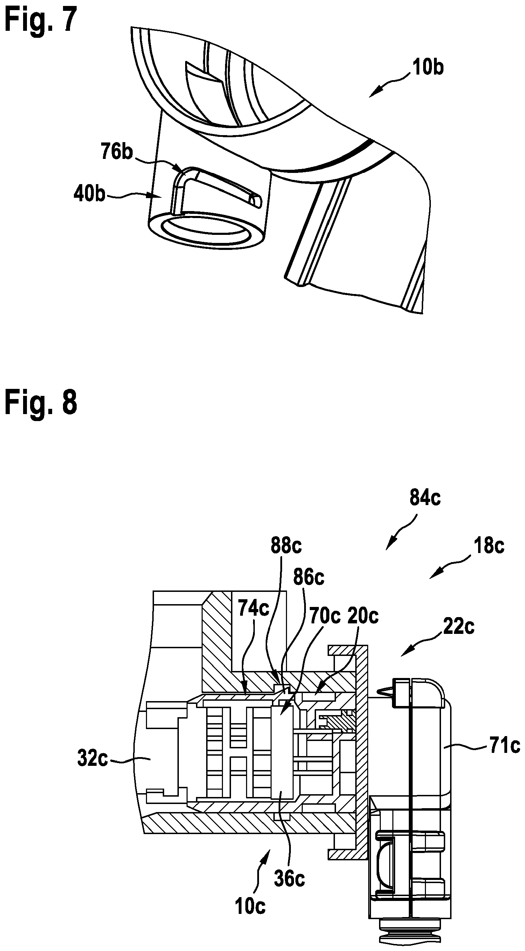

In Figur 7 ist zudem eine an einem Lenkgetriebegehäuse 10b angeordnete Führungseinheit 40b der Lenkvorrichtung dargestellt. Im vorliegenden Fall ist die Führungseinheit 40b dazu vorgesehen, die Steckverbindereinheit 18b relativ zu dem Lenkgetriebegehäuse 10b bei dem Montagevorgang in einer DrehBewegung zu führen.

Dazu umfasst die Führungseinheit 40b ein als Führungsvertiefung und/oder Führungsnut ausgebildetes Führungselement 76b, welches einen zumindest abschnittsweise gekrümmten und/oder gebogenen Verlauf aufweist. Das Führungselement 76b umfasst dabei einen ersten Führungsabschnitt mit einem linearen Verlauf zum Einführen der Steckverbindereinheit 18b in das Lenkgetriebegehäuse 10b und einen zweiten Führungsabschnitt mit einem gekrümmten und/oder gebogenen Verlauf zum Lösen der Verbindung zwischen der zweiten Steckeinheit 20b und der Trägereinheit 22b. Die Führungseinheit 40b ist somit im vorliegenden Fall ebenfalls Teil der Entkoppeleinheit 24b. Prinzipiell könnte auf eine derartige Führungseinheit jedoch auch verzichtet werden.

Figur 8 zeigt ein weiteres Ausführungsbeispiel der Erfindung. Dem Ausführungsbeispiel der Figur 8 ist der Buchstabe c nachgestellt. Das weitere Ausführungsbeispiel der Figur 8 unterscheidet sich von den vorherigen Ausführungsbeispielen zumindest im Wesentlichen durch eine Anordnung einer Befestigungseinheit 84c einer Lenkvorrichtung.

Eine Steckverbindereinheit 18c umfasst in diesem Fall eine zweite Steckeinheit 20c sowie eine Trägereinheit 22c und entspricht zumindest im Wesentlichen einer Steckverbindereinheit 18a des ersten Ausführungsbeispiels.

Zur Kopplung mit der zweiten Steckeinheit 20c umfasst die Trägereinheit 22c analog zu dem ersten Ausführungsbeispiel wenigstens ein weiteres Kopplungselement 74c, welches an einem Trägergrundkörper 71c der Trägereinheit 22c angeordnet ist und dazu vorgesehen ist, mit einem Kopplungselement 70c der zweiten Steckeinheit 20c zusammenzuwirken, um eine Kopplung zwischen der Trägereinheit 22c und der zweiten Steckeinheit 20c und im vorliegenden Fall insbesondere einem Ausgleichselement 36c der zweiten Steckeinheit 20c zu ermöglichen.

Darüber hinaus ist ein, der Steckverbindereinheit 18c zugeordnetes, erstes Befestigungselement 86c der Befestigungseinheit 84a an dem weiteren Kopplungselement 74c angeordnet. Im vorliegenden Fall ist das erste Befestigungselement 86c einstückig mit dem weiteren Kopplungselement 74c ausgebildet. Das erste Befestigungselement 86c ist dabei beispielhaft als Rastkante ausgebildet und dazu vorgesehen, mit einem, einem Lenkgetriebegehäuse 10c zugeordneten und beispielhaft als Rastvertiefung ausgebildeten, zweiten Befestigungselement 88c zusammenzuwirken.

## Patentansprüche

1. Lenkvorrichtung mit einem Lenkgetriebegehäuse (10a; 10b; 10c), welches einen Sensoraufnahmebereich (12a) bereitstellt, mit einer in einem montierten Zustand in dem Sensoraufnahmebereich (12a) angeordneten Lenksensoreinheit (14a; 14b), und mit einer in einem montierten Zustand in einer Kontaktierungsausnehmung (16a) des Lenkgetriebegehäuses (10a; 10b; 10c) angeordneten Steckverbindereinheit (18a; 18b; 18c) zur elektrischen Kontaktierung der Lenksensoreinheit (14a; 14b), wobei die Steckverbindereinheit (18a; 18b; 18c) eine Steckeinheit (20a; 20b; 20c) zur Verbindung mit der Lenksensoreinheit (14a; 14b) und eine zumindest in einem vormontierten Zustand der Steckverbindereinheit (18a; 18b; 18c) mit der Steckeinheit (20a; 20b; 20c) gekoppelte Trägereinheit (22a; 22b; 22c) umfasst, wobei die Lenkvorrichtung ferner eine Entkoppeleinheit (24a; 24b) umfasst, welche dazu vorgesehen ist, eine bei einem Montagevorgang der Steckverbindereinheit (18a; 18b; 18c) ausgeübte Kraft derart auf die Steckeinheit (20a; 20b; 20c) und/oder die Trägereinheit (22a; 22b; 22c) zu übertragen, dass sich die Verbindung zwischen der Steckeinheit (20a; 20b; 20c) und der Trägereinheit (22a; 22b; 22c) beim Montagevorgang der Steckverbindereinheit (18a; 18b; 18c) löst, und wobei die Steckeinheit (20a; 20b; 20c) zur Verbindung mit der Trägereinheit (22a; 22b; 22c) und/oder die Trägereinheit (22a; 22b; 22c) zur Verbindung mit der Steckeinheit (20a; 20b; 20c) wenigstens ein elastisches Ausgleichselement (36a; 36b; 36c) umfasst, welches dazu vorgesehen ist, wenigstens ein Steckelement (32a; 32b) der Steckeinheit (20a; 20b; 20c) zumindest während des Montagevorgangs der Steckverbindereinheit (18a; 18b; 18c) federnd zu lagern.

2. Lenkvorrichtung nach Anspruch 1, **dadurch gekennzeichnet, dass** die Steckeinheit (20a; 20b; 20c) und die Trägereinheit (22a; 22b; 22c) kraft- und/oder formschlüssig miteinander verbunden sind.

3. Lenkvorrichtung nach Anspruch 2, **dadurch gekennzeichnet, dass** die Steckeinheit (20a; 20b; 20c) und die Trägereinheit (22a; 22b; 22c) mittels einer Rastverbindung und/oder einer Steck-Drehverbindung miteinander verbunden sind.

4. Lenkvorrichtung nach einem der vorhergehenden Ansprüche, **dadurch gekennzeichnet, dass** die bei dem Montagevorgang der Steckverbindereinheit (18a; 18c) ausgeübte Kraft zum Lösen der Verbindung zwischen der Steckeinheit (20a; 20c) und der Trägereinheit (22a; 22c) zumindest eine durch eine lineare Steckbewegung der Steckverbindereinheit (18a; 18c) bewirkte Steckkraftkomponente umfasst.

5. Lenkvorrichtung nach einem der vorhergehenden Ansprüche, **dadurch gekennzeichnet, dass** die bei dem Montagevorgang der Steckverbindereinheit (18b) ausgeübte Kraft zum Lösen der Verbindung zwischen der Steckeinheit (20b) und der Trägereinheit (22b) zumindest eine durch eine Drehbewegung der Steckverbindereinheit (18b) bewirkte Drehkraftkomponente umfasst.

6. Lenkvorrichtung nach einem der vorherhegenden Ansprüche, **dadurch gekennzeichnet, dass** die Entkoppeleinheit (24a; 24b) zumindest teilweise einstückig mit der Lenksensoreinheit (14a; 14b) und/oder dem Lenkgetriebegehäuse (10a; 10b; 10c) ausgebildet ist.

7. Lenkvorrichtung nach einem der vorhergehenden Ansprüche, **dadurch gekennzeichnet, dass** die Entkoppeleinheit (24a) wenigstens ein an dem Lenkgetriebegehäuse (10a; 10c) angeordnetes Entkoppelelement (26a) umfasst, welches als Anlaufschräge ausgebildet ist und im Bereich der Kontaktierungsausnehmung (16a) des Lenkgetriebegehäuses (10a; 10c) angeordnet ist.

8. Lenkvorrichtung nach einem der vorhergehenden Ansprüche, **dadurch gekennzeichnet, dass** die Entkoppeleinheit (24b) wenigstens ein weiteres Entkoppelelement (28b) umfasst, welches Teil einer zu der Steckeinheit (20b) korrespondierenden weiteren Steckeinheit (30b) der Lenksensoreinheit (14b) ist.

9. Lenkvorrichtung nach einem der vorhergehenden Ansprüche, **dadurch gekennzeichnet, dass** die Steckeinheit (20a; 20b; 20c) wenigstens ein Steckelement (32a; 32b) und wenigstens ein elektrisches Leitungselement (34a), insbesondere ein Kabel, zur flexiblen Verbindung des Steckelements (32a; 32b) mit der Trägereinheit (22a; 22b; 22c) umfasst.

10. Lenkvorrichtung nach einem der vorhergehenden Ansprüche, **dadurch gekennzeichnet, dass** das Ausgleichselement (36a; 36b; 36c) als Gummielement, als Elastomerelement, als Silikonelement, als Gelelement und/oder als Federelement ausgebildet ist.

11. Lenkvorrichtung nach einem der vorhergehenden Ansprüche, **dadurch gekennzeichnet, dass** das Ausgleichselement (36a; 36b; 36c) dazu vorgesehen ist, das Steckelement (32a; 32b) derart federnd zu lagern, dass bei dem Montagevorgang der Steckverbindereinheit (18a; 18b; 18c) auftretende Kräfte ausgeglichen und/oder derart auf das Steckelement (32a; 32b) übertragen werden, dass eine Kopplung zwischen dem Steckelement (32a; 32b) und einem weiteren Steckelement (64a) der Lenksensoreinheit (14a; 14b) und hierdurch eine direkte und/oder automatische elektrische Kontaktierung der Lenksensoreinheit (14a; 14b) beim Montagevorgang der Steckverbindereinheit (18a; 18b; 18c) erfolgt.

12. Lenkvorrichtung nach einem der vorhergehenden Ansprüche, **dadurch gekennzeichnet, dass** die Steckverbindereinheit (18a; 18b; 18c) zur Bereitstellung einer elektrischen Verbindung zwischen dem Sensoraufnahmebereich (12a) und einer Außenseite (38a) des Lenkgetriebegehäuses (10a; 10b; 10c) vorgesehen ist.

13. Lenkvorrichtung nach einem der vorhergehenden Ansprüche, **gekennzeichnet durch** eine Führungseinheit (40a; 40b), welche dazu vorgesehen ist, eine definierte Ausrichtung der Steckverbindereinheit (18a; 18b; 18c) relativ zu dem Lenkgetriebegehäuse (10a; 10b; 10c) bei dem Montagevorgang festzulegen und die Steckverbindereinheit (18a; 18b; 18c) relativ zu dem Lenkgetriebegehäuse (10a; 10b; 10c) bei dem Montagevorgang zu führen.

14. Lenksystem (42a) mit zumindest einer Lenkvorrichtung nach einem der vorhergehenden Ansprüche.

15. Steckverbindereinheit (18a; 18b; 18c) einer Lenkvorrichtung nach einem der Ansprüche 1 bis 13.

16. Verfahren zur Montage einer Lenkvorrichtung, insbesondere nach einem der Ansprüche 1 bis 13, wobei die Lenkvorrichtung ein Lenkgetriebegehäuse (10a; 10b; 10c), welches einen Sensoraufnahmebereich (12a) bereitstellt, eine in einem montierten Zustand in dem Sensoraufnahmebereich (12a) angeordnete Lenksensoreinheit (14a; 14b) und eine in einem montierten Zustand in einer Kontaktierungsausnehmung (16a) des Lenkgetriebegehäuses (10a; 10b; 10c) angeordnete Steckverbindereinheit (18a; 18b; 18c) zur elektrischen Kontaktierung der Lenksensoreinheit (14a; 14b) umfasst, wobei die Steckverbindereinheit (18a; 18b; 18c) eine Steckeinheit (20a; 20b; 20c) zur Verbindung mit der Lenksensoreinheit (14a; 14b) und eine zumindest in einem vormontierten Zustand der Steckverbindereinheit (18a; 18b; 18c) mit der Steckeinheit (20a; 20b; 20c) gekoppelte Trägereinheit (22a; 22b; 22c) umfasst, wobei die Steckeinheit (20a; 20b; 20c) zur Verbindung mit der Trägereinheit (22a; 22b; 22c) und/oder die Trägereinheit (22a; 22b; 22c) zur Verbindung mit der Steckeinheit (20a; 20b; 20c) wenigstens ein elastisches Ausgleichselement (36a; 36b; 36c) umfasst, welches dazu vorgesehen ist, wenigstens ein Steckelement (32a; 32b) der Steckeinheit (20a; 20b; 20c) zumindest während des Montagevorgangs der Steckverbindereinheit (18a; 18b; 18c) federnd zu lagern, und wobei eine bei einem Montagevorgang der Steckverbindereinheit (18a; 18b; 18c) ausgeübte Kraft derart auf die Steckeinheit (20a; 20b; 20c) und/oder die Trägereinheit (22a; 22b; 22c) übertragen wird, dass die Verbindung zwischen der Steckeinheit (20a; 20b; 20c) und der Trägereinheit (22a; 22b; 22c) beim Montagevorgang der Steckverbindereinheit (18a; 18b; 18c) gelöst wird.

## Claims

1. Steering device having a steering gear housing (10a; 10b; 10c) which provides a sensor receptacle region (12a), having a steering sensor unit (14a; 14b) which in an assembled state is disposed in the sensor receptacle region (12a), and having a plug connector unit (18a; 18b; 18c) which for electrically contacting the steering sensor unit (14a; 14b) in an assembled state is disposed in a contacting clearance (16a) of the steering gear housing (10a; 10b; 10c), wherein the plug connector unit (18a; 18b; 18c) comprises a plug-in unit (20a; 20b; 20c) for connecting to the steering sensor unit (14a; 14b) and a support unit (22a; 22b; 22c) which at least in a preassembled state of the plug connector unit (18a; 18b; 18c) is coupled to the plug-in unit (20a; 20b; 20c), wherein the steering device furthermore comprises an uncoupling unit (24a; 24b) which is provided for transmitting a force which is exerted in an assembly procedure of the plug connector unit (18a; 18b; 18c) to the plug-in unit (20a; 20b; 20c) and/or the support unit (22a; 22b; 22c) such that the connection between the plug-in unit (20a; 20b; 20c) and the support unit (22a; 22b; 22c) is released in the assembly procedure of the plug connector unit (18a; 18b; 18c); and wherein the plug-in unit (20a; 20b; 20c) for connecting to the support unit (22a; 22b; 22c) and/or the support unit (22a; 22b; 22c) for connecting to the plug-in unit (20a; 20b; 20c) comprise/comprises at least one elastic compensation element (36a; 36b; 36c) which, at least during the assembly procedure of the plug connector unit (18a; 18b; 18c), is provided for resiliently mounting at least one plug-in element (32a; 32b) of the plug-in unit (20a; 20b; 20c).

2. Steering device according to Claim 1, **characterized in that** the plug-in unit (20a; 20b; 20c) and the support unit (22a; 22b; 22c) are connected to one another in a force-fitting and/or form-fitting manner.

3. Steering device according to Claim 2, **characterized in that** the plug-in unit (20a; 20b; 20c) and the support unit (22a; 22b; 22c) are connected to one another by means of a latching connection and/or a plug-and-rotate connection.

4. Steering device according to one of the preceding claims, **characterized in that** the force which in the assembly procedure of the plug connector unit (18a; 18c) is exerted for releasing the connection between the plug-in unit (20a; 20c) and the support unit (22a; 22c) comprises at least one plug-in force component which is caused by a linear plug-in movement of the plug connector unit (18a; 18c).

5. Steering device according to one of the preceding claims, **characterized in that** the force which in the assembly procedure of the plug connector unit (18b) is exerted for releasing the connection between the plug-in unit (20b) and the support unit (22b) comprises at least one rotary force component which is caused by a rotating movement of the plug connector unit (18b).

6. Steering device according to one of the preceding claims, **characterized in that** the uncoupling unit (24a; 24b) is at least partially configured in one piece with the steering sensor unit (14a; 14b) and/or the steering gear housing (10a; 10b; 10c).

7. Steering device according to one of the preceding claims, **characterized in that** the uncoupling unit (24a) comprises at least one uncoupling element (26a) which is disposed on the steering gear housing (10a; 10c), which is configured as a ramp and is disposed in the region of the contacting clearance (16a) of the steering gear housing (10a; 10c).

8. Steering device according to one of the preceding claims, **characterized in that** the uncoupling unit (24b) comprises at least one further uncoupling element (28b) which is part of a further plug-in unit (30b) of the steering sensor unit (14b) that communicates with the plug-in unit (20b).

9. Steering device according to one of the preceding claims, **characterized in that** the plug-in unit (20a; 20b; 20c) comprises at least one plug-in element (32a; 32b) and at least one electrical line element (34a), in particular a cable, for flexibly connecting the plug-in element (32a; 32b) to the support unit (22a; 22b; 22c).

10. Steering device according to one of the preceding claims, **characterized in that** the compensation element (36a; 36b; 36c) is configured as a rubber element, as an elastomer element, as a silicone element, as a gel element and/or as a spring element.

11. Steering device according to one of the preceding claims, **characterized in that** the compensation element (36a; 36b; 36c) is provided for resiliently mounting the plug-in element (32a; 32b) in such a manner that forces occurring in the assembly procedure of the plug connector unit (18a; 18b; 18c) are compensated and/or transmitted to the plug-in element (32a; 32b) in such a manner that coupling takes place between the plug-in element (32a; 32b) and a further plug-in element (64a) of the steering sensor unit (14a; 14b), and direct and/or automatic electrical contacting of the steering sensor unit (14a; 14b) takes place in the assembly procedure of the plug connector unit (18a; 18b; 18c) as a result.

12. Steering device according to one of the preceding claims, **characterized in that** the plug connector unit (18a; 18b; 18c) is provided for providing an electrical connection between the sensor receptacle region (12a) and an external side (38a) of the steering gear housing (10a; 10b; 10c).

13. Steering device according to one of the preceding claims, **characterized by** a guide unit (40a; 40b) which in the assembly procedure is provided for establishing a defined orientation of the plug connector unit (18a; 18b; 18c) relative to the steering gear housing (10a; 10b; 10c) and in the assembly procedure for guiding the plug connector unit (18a; 18b; 18c) relative to the steering gear housing (10a; 10b; 10c).

14. Steering system (42a) having at least one steering device according to one of the preceding claims.

15. Plug connector unit (18a; 18b; 18c) of a steering device according to one of Claims 1 to 13.

16. Method for assembling a steering device, in particular according to one of Claims 1 to 13, wherein the steering device comprises a steering gear housing (10a; 10b; 10c) which provides a sensor receptacle region (12a), a steering sensor unit (14a; 14b) which in an assembled state is disposed in the sensor receptacle region (12a), and a plug connector unit (18a; 18b; 18c) which for electrically contacting the steering sensor unit (14a; 14b) in an assembled state is disposed in a contacting clearance (16a) of the steering gear housing (10a; 10b; 10c), wherein the plug connector unit (18a; 18b; 18c) comprises a plug-in unit (20a; 20b; 20c) for connecting to the steering sensor unit (14a; 14b), and a support unit (22a; 22b; 22c) which at least in a preassembled state of the plug connector unit (18a; 18b; 18c) is coupled to the plug-in unit (20a; 20b; 20c), wherein the plug-in unit (20a; 20b; 20c) for connecting to the support unit (22a; 22b; 22c) and/or the support unit (22a; 22b; 22c) for connecting to the plug-in unit (20a; 20b; 20c) comprise/comprises at least one elastic compensation element (36a; 36b; 36c) which is provided for resiliently mounting at least one plug-in element (32a; 32b) of the plug-in unit (20a; 20b; 20c) at least during the assembly procedure of the plug connector unit (18a; 18b; 18c), and wherein a force which is exerted in an assembly procedure of the plug connector unit (18a; 18b; 18c) is transmitted to the plug-in unit (20a; 20b; 20c) and/or the support unit (22a; 22b; 22c) in such a manner that the connection between the plug-in unit (20a; 20b; 20c) and the support unit (22a; 22b; 22c) is released in the assembly procedure of the plug connector unit (18a; 18b; 18c).

## Revendications

1. Dispositif de direction comprenant un boîtier de mécanisme de direction (10a ; 10b ; 10c), qui fournit une zone de réception de capteur (12a), avec une unité formant capteur de direction (14a ; 14b) disposée, dans un état de montage, dans la zone de réception de capteur (12a), et avec une unité (18a ; 18b ; 18c) formant connecteur enfichable disposée, dans un état de montage, dans un évidement de mise en contact (16a) du boîtier de mécanisme de direction (10a ; 10b ; 10c) pour la mise en contact électrique de l'unité (14a ; 14b) formant capteur de direction, l'unité formant connecteur enfichable (18a ; 18b ; 18c) comprenant une unité enfichable (20a ; 20b ; 20c) pour la connexion à l'unité formant capteur de direction (14a ; 14b) et une unité support (22a ; 22b ; 22c) reliée à l'unité enfichable (20a ; 20b ; 20c) au moins dans un état de préassemblage de l'unité formant connecteur enfichable (18a ; 18b ; 18c), le dispositif de direction comprenant en outre une unité de déconnexion (24a ; 24b) qui est prévue pour transmettre une force exercée lors d'une opération de montage de l'unité formant connecteur enfichable (18a ; 18b ; 18c) à l'unité enfichable (20a ; 20b ; 20c) et/ou à l'unité support (22a ; 22b ; 22c) de telle sorte que la connexion entre l'unité enfichable (20a ; 20b ; 20c) et l'unité support (22a ; 22b ; 22c) se défait lors de l'opération de montage de l'unité formant connecteur enfichable (18a ; 18b ; 18c), et dans laquelle l'unité enfichable (20a ; 20b ; 20c) pour la connexion avec l'unité support (22a ; 22b ; 22c) et/ou l'unité support (22a ; 22b ; 22c) pour la connexion avec l'unité enfichable (20a ; 20b ; 20c) comprend au moins un élément de compensation élastique (36a ; 36b ; 36c) qui est prévu pour loger de manière élastique au moins un élément enfichable (32a ; 32b) de l'unité enfichable (20a ; 20b ; 20c) au moins pendant l'opération de montage de l'unité formant connecteur enfichable (18a ; 18b ; 18c).

2. Dispositif de direction selon la revendication 1, **caractérisé en ce que** l'unité enfichable (20a ; 20b ; 20c) et l'unité support (22a ; 22b ; 22c) sont reliées entre elles par adhérence et/ou par complémentarité de formes.

3. Dispositif de direction selon la revendication 2, **caractérisé en ce que** l'unité enfichable (20a ; 20b ; 20c) et l'unité support (22a ; 22b ; 22c) sont reliées entre elles au moyen d'une connexion par encliquetage et/ou d'une connexion pivot enfichable.

4. Dispositif de direction selon l'une des revendications précédentes, **caractérisé en ce que** la force exercée lors de l'opération de montage de l'unité formant connecteur enfichable (18a ; 18c) pour libérer la connexion entre l'unité enfichable (20a ; 20c) et l'unité support (22a ; 22c) comprend au moins une composante de force d'enfichage provoquée par un mouvement linéaire d'enfichage de l'unité formant connecteur enfichable (18a ; 18c).

5. Dispositif de direction selon l'une des revendications précédentes, **caractérisé en ce que** la force exercée lors de l'opération de montage de l'unité formant connecteur enfichable (18b) pour libérer la connexion entre l'unité enfichable (20b) et l'unité support (22b) comprend au moins une composante de force de rotation provoquée par un mouvement de rotation de l'unité formant connecteur enfichable (18b).

6. Dispositif de direction selon l'une des revendications précédentes, **caractérisé en ce que** l'unité de déconnexion (24a ; 24b) est réalisée au moins partiellement d'une seule pièce avec l'unité formant capteur de direction (14a ; 14b) et/ou le boîtier de mécanisme de direction (10a ; 10b ; 10c).

7. Dispositif de direction selon l'une des revendications précédentes, **caractérisé en ce que** l'unité de déconnexion (24a) comprend au moins un élément de déconnexion (26a) disposé sur le boîtier de mécanisme de direction (10a ; 10c), qui est réalisé sous la forme d'un biseau de départ et qui est disposé dans la zone de l'évidement de mise en contact (16a) du boîtier de mécanisme de direction (10a ; 10c).

8. Dispositif de direction selon l'une des revendications précédentes, **caractérisé en ce que** l'unité de déconnexion (24b) comprend au moins un autre élément de déconnexion (28b) qui fait partie d'une autre unité enfichable (30b) de l'unité formant capteur de direction (14b) correspondant à l'unité enfichable (20b).

9. Dispositif de direction selon l'une des revendications précédentes, **caractérisé en ce que** l'unité enfichable (20a ; 20b ; 20c) comprend au moins un élément enfichable (32a ; 32b) et au moins un élément conducteur électrique (34a), notamment un câble, pour relier de manière flexible l'élément enfichable (32a ; 32b) à l'unité support (22a ; 22b ; 22c).

10. Dispositif de direction selon l'une des revendications précédentes, **caractérisé en ce que** l'élément de compensation (36a ; 36b ; 36c) est réalisé sous la forme d'un élément en caoutchouc, d'un élément en élastomère, d'un élément en silicone, d'un élément en gel et/ou d'un élément à ressort.

11. Dispositif de direction selon l'une des revendications précédentes, **caractérisé en ce que** l'élément de compensation (36a ; 36b ; 36c) est prévu pour monter de manière élastique l'élément enfichable (32a ; 32b) de telle sorte que, lors de l'opération de montage de l'unité formant connecteur enfichable (18a ; 18b ; 18c), les forces qui se produisent soient équilibrées et/ou transférées à l'élément enfichable (32a ; 32b) de telle sorte qu'il se produise une liaison entre l'élément enfichable (32a ; 32b) et un autre élément enfichable (64a) de l'unité formant capteur de direction (14a ; 14b) et, de ce fait, une mise en contact électrique directe et/ou automatique de l'unité formant capteur de direction (14a ; 14b) lors du processus de montage de l'unité formant connecteur enfichable (18a ; 18b ; 18c).

12. Dispositif de direction selon l'une des revendications précédentes, **caractérisé en ce que** l'unité formant connecteur enfichable (18a ; 18b ; 18c) est prévue pour fournir une connexion électrique entre la zone de réception du capteur (12a) et une face extérieure (38a) du boîtier de mécanisme de direction (10a ; 10b ; 10c) .

13. Système de direction selon l'une des revendications précédentes, **caractérisé par** une unité de guidage (40a ; 40b) prévue pour établir une orientation définie de l'unité formant connecteur enfichable (18a ; 18b ; 18c) par rapport au boîtier de mécanisme de direction (10a ; 10b ; 10c) lors de l'opération de montage et pour guider l'unité formant connecteur enfichable (18a ; 18b ; 18c) par rapport au boîtier de mécanisme de direction (10a ; 10b ; 10c) lors de l'opération de montage.

14. Système de direction (42a) comprenant au moins un dispositif de direction selon l'une quelconque des revendications précédentes.

15. Unité formant connecteur (18a ; 18b ; 18c) d'un dispositif de direction selon l'une quelconque des revendications 1 à 13.

16. Procédé de montage d'un dispositif de direction, notamment selon l'une des revendications 1 à 13, le dispositif de direction comprenant un boîtier de mécanisme de direction (10a ; 10b ; 10c) fournissant une zone de réception de capteur (12a), une unité formant capteur de direction (14a ; 14b) disposée, à l'état de montage, dans la zone de réception de capteur (12a), et une unité formant capteur de direction (14a ; 14b) disposée, à l'état de montage, dans un évidement de mise en contact (16a) du boîtier de mécanisme de direction (10a ; 10b ; 10c) pour la mise en contact électrique de l'unité formant capteur de direction (14a ; 14b), l'unité formant connecteur enfichable (18a; 18b ; 18c) comprenant une unité enfichable (20a ; 20b ; 20c) pour la connexion avec l'unité formant capteur de direction (14a ; 14b) et une unité support (22a ; 22b ; 22c), l'unité enfichable (20a ; 20b ; 20c) destinée à être reliée à l'unité support (22a ; 22b ; 22c) et/ou l'unité support (22a ; 22b ; 22c) destinée à être reliée à l'unité enfichable (20a ; 20b ; 20c) comprend au moins un élément de compensation élastique (36a ; 36b ; 36c) qui est prévu pour compenser au moins un élément enfichable (32a ; 32b) de l'unité enfichable (20a ; 20b ; 20c) au moins pendant le processus de montage de l'unité formant connecteur enfichable (18a ; 18b ; 18c), et une force exercée lors d'une opération de montage de l'unité formant connecteur enfichable (18a ; 18b ; 18c) étant transmise à l'unité enfichable (20a ; 20b ; 20c) et/ou à l'unité support (22a ; 22b ; 22c) de telle sorte que la connexion entre l'unité enfichable (20a ; 20b ; 20c) et l'unité support (22a ; 22b ; 22c) est libérée lors de l'opération de montage de l'unité formant connecteur enfichable (18a ; 18b ; 18c).
